# EUROPÄISCHE PATENTSCHRIFT

(11) **EP 1 288 047 B1**
(45) Veröffentlichungstag und Bekanntmachung des Hinweises auf die Patenterteilung: **04.10.2006**
(21) Anmeldenummer: 02015896.0
(22) Anmeldetag: 17.07.2002
(51) Int. Cl.: B60J 7/22

(54) **Kraftfahrzeug mit einer Dachanordnung**
Motor vehicle with roof assembly
Agencement de toit pour véhicule automobile

(30) Priorität: 04.09.2001 DE 10143265
(43) Veröffentlichungstag der Anmeldung: 05.03.2003
(73) Patentinhaber: Dr.Ing. h.c.F. Porsche Aktiengesellschaft, 70435 Stuttgart (DE)
(72) Erfinder: Pfertner, Kurt, 71254 Ditzingen (DE); Armbruster, Reiner, 75417 Mühlacker (DE)

(56) Entgegenhaltungen:
- DE-U- 8 905 212
- US-A- 4 482 183
- US-A- 5 178 436

## Beschreibung

Bei der Erfindung wird ausgegangen von einem Kraftfahrzeug mit einer Dachanordnung, gemäß Oberbegriff des Anspruchs 1.

Aus der DE 198 26 434 C1 ist ein gattungsgemäßes Kraftfahrzeug mit einer Dachanordnung bekannt, die einen eine Dachöffnung zumindest teilweise freigebenden und verschließenden Schiebedeckel sowie eine Windabweiservorrichtung mit einem Windabweiserblatt und einer Ausstellhebelanordnung umfasst. Über die Ausstellhebelanordnung ist das Windabweiserblatt in eine Ruhe- und Wirkstellung verlagerbar, wobei die Ausstellhebelanordnung mit ihrem ersten Ende in einer etwa parallel zur Fahrzeugquerachse verlaufenden ersten Schwenkachse am Aufbau des Fahrzeugs gelagert und mit ihrem zweiten Enden mit dem Windabweiserblatt verbunden ist. In seiner Ruhestellung liegt das Windabweiserblatt unter dem Niveau der festen Dachaußenhaut. In Wirkstellung überragt das Windabweiserblatt die Dachaußenhaut. Nachteilig bei diesem Fahrzeug ist der relativ große Platzbedarf der Windabweiservorrichtung in Ruhestellung.

Aufgabe der Erfindung ist es daher, ein Kraftfahrzeug der eingangs genannten Aut anzugeben, bei dem der Platzbedarf der Windabweiservorrichtung in Ruhestellung verringert oder bei gegebenem Platzangebot für die Windabweiservorrichtung diese in Ruhestellung ablegbar ist.

Gelöst wird diese Aufgabe mit einem Kraftfahrzeug mit den in Anspruch 1 genannten Merkmalen. Weitere, die Erfindung ausgestaltende Merkmale sind in den Unteransprüchen angegeben.

Die mit der Erfindung hauptsächlich erzielten Vorteile sind darin zu sehen, dass das Windabweiserblatt bei seiner Verlagerung in die Ruhestellung um die zweiten Schwenkachse und in Längsrichtung bewegt und so unter einem die Dachöffnung umgebenden Dachrahmen hindurchgeführt werden kann, wodurch sein Platzbedarf in Ruhestellung optimiert ist. Außerdem ist während der Längsverschiebung des Windabweiserblattes die Bewegungsüberlagerung um die zweite Schwenkachse möglich, so dass das Windabweiserblatt in einer im Wesentlichen horizontalen Lage unter dem Dachrahmen hindurch bewegt werden kann, so dass es unter die Dachaußenhaut und in Richtung des Windschutzscheibenrahmens des Fahrzeugs verschoben werden kann. Nachdem es unter dem Dachrahmen hindurch bewegt wurde, kann es um die zweite Schwenkachse durch die Zwangsverschwenkung wieder zurückverschwenkt und dabei in eine im Wesentlichen aufrechte Lage gebracht werden. Der in Fahrzeuglängsrichtung benötigte Platzbedarf ist so weiter verringert.

Nach einem bevorzugten Ausführungsbeispiel gemäß Anspruch 2 ist die Schwenkbewegung der Ausstellhebelanordnung um die erste Schwenkachse wie die Schwenkbewegung des Windabweiserblattes um die zweite Schwenkachse zwangsgesteuert, d. h. der Bewegungsablauf der Windabweiservorrichtung ist fest mit der Bewegung des Schiebedeckels gekoppelt bzw. erfolgt in Abhängigkeit der Schiebeposition des Deckels. Die Zwangssteuerung der Schwenkbewegungen wird besonders günstig über die Steuerbahn bzw. Kurvenbahn erreicht, die auf das Windabweiserblatt bzw. die Ausstellhebelanordnung wirken.

Für die Längsverschiebung des Windabweiserblattes ist nach einer in Anspruch 3 angegebenen Ausführungsform am Schiebedeckel ein Mitnehmeranschlag vorgesehen, der bei einer Schließbewegung des Schiebedeckels das Windabweiserblatt in Fahrzeuglängsrichtung mitnimmt und so unter dem Dachrahmen hindurch bewegt werden kann.

Ferner ist für die Längsverschiebbarkeit des Windabweiserblattes nach Anspruch 5 vorgesehen, die Ausstellhebelanordnung mit teleskopartig ineinander verschiebbaren Teilhebeln auszustatten. Wird das Windabweiserblatt durch den Mitnehmeranschlag mitgenommen, werden die Teilhebel teleskopartig ausgefahren, wodurch sich die Länge der Ausstellhebelanordnung vergrößert und dadurch die Längsverschiebbarkeit gegeben ist. Alternativ oder zusätzlich könnte die Ausstellhebelanordnung mit ihrem ersten Ende in Fahrzeuglängsrichtung verschiebbar am Aufbau oder Modulrahmen gelagert sein.

Nach einer Weiterbildung der Erfindung mit den in Anspruch 9 genannten Merkmalen ist in besonders vorteilhafter Weise die Schwenkbewegung der Ausstellhebelanordnung derart zwangsgesteuert, dass diese eine Auf- und Abbewegung ausführt, so dass das Hindurchbewegen des Windabweiserblattes unter dem Dachrahmen unterstützt wird.

Die Erfindung wird nachfolgend anhand von Ausführungsbeispielen mit Bezug auf die Zeichnung näher erläutert. Es zeigen:
Fig. 1 in einer Perspektive ein Kraftfahrzeug mit einer Dachanordnung,
Fig. 2 die Dachanordnung in Schnittdarstellung entlang der Linie II-II und
Fig. 3 den Bewegungsablauf eines Windabweiserblattes der Dachanordnung.

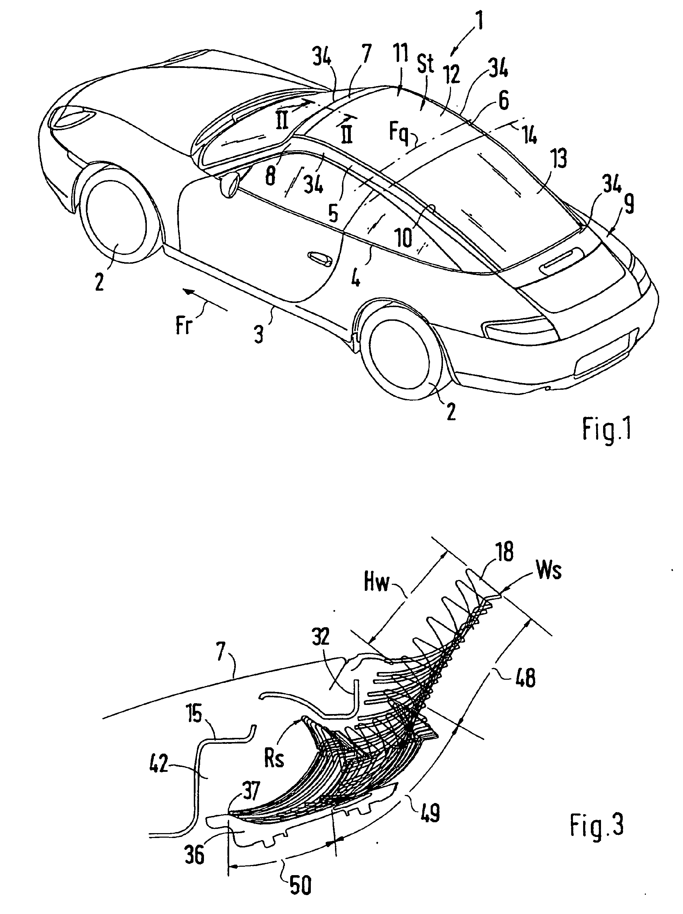

Die Fig. 1 zeigt ein Kraftfahrzeug 1, insbesondere Personenwagen, mit einem von Rädern 2 getragenen Aufbau 3, der eine Gürtellinie 4 überspannende Dachlängsholme 5 und 6 besitzt, die sich von einem Querteil 7 eines Windschutzscheibenrahmens 8 bis in einen Heckbereich 9 des Fahrzeugs 1 bogenförmig erstrecken, so dass der Aufbau 3 die Form für ein Coupé mit Fließheck besitzt. Zwischen den Dachlängsholmen 5 und 6 und dem Querteil 7 sowie dem Heckbereich 9 ist eine Dachöffnung 10 ausgebildet, in die eine Dachanordnung 11 mit zumindest einem vorderen Schiebedeckel 12 und beispielsweise einem zusätzlichen Heckdeckel 13 eingesetzt ist, wobei der Schiebedeckel die Dachöffnung 10 zumindest teilweise freigeben und verschließen kann. Dafür ist der Schiebedeckel 12 unter den Heckdeckel 13 verlagerbar. Der Heckdeckel 13 hingegen ist beispielsweise als Heckklappe ausgebildet und kann entgegen der Fahrtrichtung Fr um eine Klappachse 14 bewegt werden. Alternativ kann der Heckdeckel dem Aufbau 3 zugeordnet sein, so dass die Dachanordnung 11 lediglich den zumindest einen Schiebedeckel 12 umfasst. Denkbar ist es auch, den Schiebedeckel 12 in einem Ausschnitt einer festen Dachaußenhaut verlagerbar anzuordnen. Bevorzugt wird jedoch die in Fig. 1 dargestellte Dachanordnung 11, bei der der Schiebedeckel 12 bis an die Dachlängsholme 5 und 6 heranreicht.

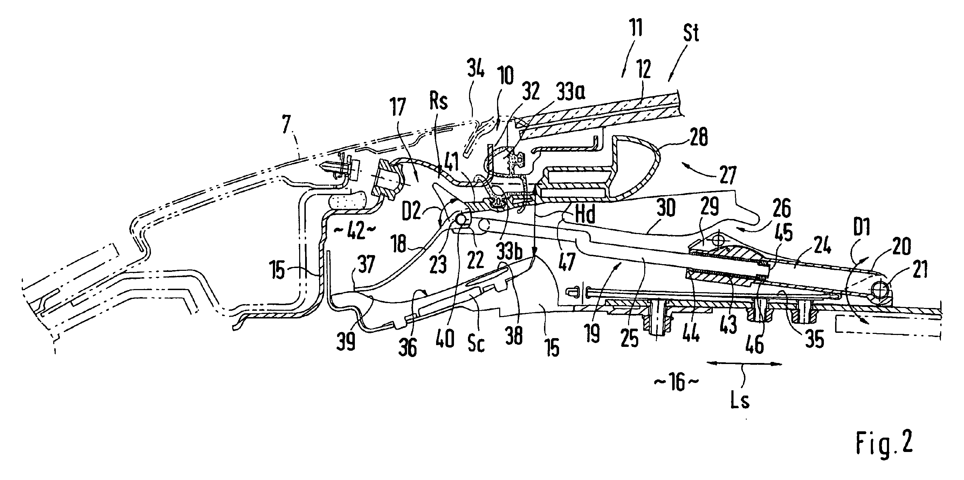

Die Dachanordnung 11 mit den Deckeln 12 und 13 ist vorzugsweise als vorgefertigtes Dachmodul ausgebildet und besitzt einen umlaufenden Modulrahmen 15. Es wird beispielsweise durch die vom Windschutzscheibenrahmen 8 umgebene Öffnung in den Fahrzeuginnenraum 16 eingebracht und dann von unten her an die Dachlängsholme 5 und 6, den Querteil 7 und den Heckbereich 9 angelegt und mit dem Aufbau 3 verbunden, wie dies ausschnittweise am Querteil 7 in Fig. 2 dargestellt ist. An dem Modulrahmen 15 ist der Schiebedeckel 12 verschieblich geführt und der Heckdeckel 13 schwenkbar angelenkt.

Die Dachanordnung 11 umfasst ferner eine Windabweiservorrichtung 17, die in Fig. 3 in ihrer Ruhe- bzw. Einfahrstellung Rs vorliegt, in der sie unterhalb der festen Dachaußenhaut, beispielsweise dem Querteil 7, zu liegen kommt. Die Windabweiservorrichtung 17 weist ein Windabweiserblatt 18 und eine Ausstellhebelanordnung 19 für das Windabweiserblatt 18 auf. Die Ausstellhebelanordnung 19 ist fest am Aufbau 3 oder am Modulrahmen 15 angebracht, jedoch mit ihrem ersten Ende 20 in einer ersten Schwenkachse 21 gelagert, die etwa parallel zu einer Fahrzeugquerachse Fq (Fig. 1) verläuft. Mit ihrem zweiten Ende 22 ist die Ausstellhebelanordnung 19 in einer etwa parallel zur Fahrzeugquerachse Fq verlaufenden zweiten Schwenkachse 23 mit dem Windabweiserblatt 18 verbunden. Außerdem umfasst die Ausstellhebelanordnung 19 wenigstens zwei Teilhebel 24 und 25, die teleskopartig ineinander verschiebbar sind, so dass das Windabweiserblatt 18 längsverschieblich (Pfeil Ls) etwa parallel zur Fahrzeuglängsachse FI geführt ist. Sowohl die Schwenkbewegungen um die Schwenkachsen 21 und 23 als auch die Längsverschieblichkeit Ls des Windabweiserblattes 18 sind vorzugsweise zwangsgesteuert, was bedeutet, dass die Verlagerung der Windabweiservorrichtung 17 aus ihrer Ruhestellung Rs in die in Fig. 3 angedeutete Wirkstellung Ws, in der das Windabweiserblatt 18 die Dachaußenhaut, beispielsweise Querteil 7, überragt, an die Verschiebebewegung des Schiebedeckels 12 gekoppelt bzw. unmittelbar durch den Schiebedeckel 12 gesteuert sind.

Für die Zwangssteuerung der Ausstellhebelanordnung 19 um die erste Schwenkachse 21 ist eine Kurvenbahn 26 an der Unterseite 27 des Schiebedeckels 12, insbesondere an dessen Deckelrahmen 28, vorgesehen. Die Kurvenbahn 26 wirkt direkt auf die Ausstellhebelanordnung 19, an der hierfür ein Nocken 29 ausgebildet ist. Die Kurvenbahn 26 besitzt wenigstens ein Wellental 30 sowie einen Wellenberg 31, wobei - in Fahrtrichtung Fr gesehen - das Wellental 30 vor dem Wellenberg 31 liegt. Bei einer Schiebedeckelbewegung in Längsrichtung Ls wird die Ausstellhebelanordnung 19 um ihre erste Schwenkachse 21 alternierend im Uhrzeigersinn und entgegen (Doppelpfeil D1) bewegt, wobei die Länge und Lage des Wellentals 30 und des Wellenbergs 31 so gewählt sind, dass das Wellental 30 dann wirkt, wenn das Windabweiserblatt 18 unter einer Anlage 32 für eine Deckeldichtung 33a bzw. 33b hindurchgeführt werden soll, wobei diese Anlage 32 am Modulrahmen 15 oder am einen Teil des Aufbaus 3 bildenden Dachrahmen 34 angeordnet ist, welcher Dachrahmen 34 die Öffnung 10 umgibt. Für die Ausstellbewegung im Uhrzeigersinn der Ausstellhebelanordnung 19 um die erste Schwenkachse 21 ist die Ausstellhebelanordnung mit einer ersten Feder 35 beaufschlagt und wird so gegen die Kurvenbahn 26 bzw. in Wirkstellung Ws gedrängt. Die Feder 35 ist beispielsweise als Blattfeder ausgebildet, die mit ihrem einen Ende am Modulrahmen befestigt ist und mit ihrem anderen Ende gegen die Ausstellhebelanordnung 19 drückt.

Für die Zwangssteuerung des Windabweiserblattes 18 um die zweite Schwenkachse 23 ist am Rahmen 15 eine Steuerbahn 36 vorgesehen, die mit dem freien Ende 37 des Windabweiserblattes 18 zusammenwirkt und somit dieses - je nachdem, ob es in Wirkoder Ruhestellung verlagert wird - im Uhrzeigersinn oder entgegengesetzt (Doppelpfeil D2) zwangsverschwenkt. Die Steuerbahn 36 weist im Wesentlichen einen abfallenden Abschnitt 38 und einen ansteigenden Abschnitt 39 auf, wobei der ansteigende Abschnitt - in Fahrtrichtung Fr gesehen - vor dem abfallenden Abschnitt 38 liegt. Für die Schwenkbewegung des Windabweiserblattes 18 entgegen dem Uhrzeigersinn ist eine zweite Feder 40 vorgesehen, die beispielsweise als um die Schwenkachse 23 gelegte Schenkelfeder ausgebildet sein kann, die sich mit ihrem einen Schenkel an der Ausstellhebelanordnung 19 und mit ihrem anderen Schenkel am Windabweiserblatt 19 anlegen kann. Damit ist sichergestellt, dass das freie Ende 37 auf der Steuerbahn 36 federbelastet aufliegt und dass außerdem das Windabweiserblatt 18 seine in Wirkstellung Ws vorliegende etwa aufrechte Lage einnimmt.

Für die Zwangssteuerung der Längsverschieblichkeit Ls des Windabweiserblattes 18 ist an der Unterseite 27 des Schiebedeckels 12, insbesondere an dessen Deckelrahmen 28 ein Mitnehmeranschlag 41 ausgebildet, der das Windabweiserblatt 18 in seinen unter dem Querteil 7 bzw. unter der Dachaußenhaut liegenden Aufnahmeraum 42 in Fahrtrichtung Fr schiebt, wobei der Aufnahmeraum 42 vorzugsweise im Modulrahmen 15 liegt. Trifft der Mitnehmeranschlag 41 bei einer Schließbewegung (in Fahrtrichtung Fr) des Deckels 12 auf das Windabweiserblatt 18, wird die Ausstellhebelanordnung 19 durch das teleskopartige Auseinanderziehen der Teilhebel 24 und 25 verlängert, wodurch das Windabweiserblatt 18 in seinen Aufnahmeraum 42 verschoben wird. Bei diesem Auseinanderziehen der Teilhebel 24 und 25 werden diese gegeneinander über eine dritte Feder 43 kraftbeaufschlagt, so dass die Feder 43 gespannt bzw. zusammengedrückt wird. Die Feder 43 ist im Teilhebel 24 angeordnet und liegt darin an einem Haltekragen 44 an. Ferner wird die Feder 43 von dem anderen Teilhebel 25 durchgriffen, der an seinem Durchgriffsende 45 einen Federteller 46 besitzt, wodurch die Feder 43, die als Schraubenfeder realisiert ist, zwischen dem Haltekragen 44 und dem Federteller 46 vorgespannt werden kann.

Insgesamt zeigt sich für die Zwangssteuerung der Windabweiservorrichtung 17 von der Ruhestellung Rs in die Wirkstellung Ws eine Federsteuerung durch die Federn 35, 40 und 43 und von der Wirkstellung Ws in die Ruhestellung Rs eine Bewegungssteuerung durch die Kurvenbahn 26, Steuerbahn 36 und den Mitnehmeranschlag 41 entgegen den Federkräften.

Anhand von Fig. 3 mit Bezug auf Fig. 2 wird rein beispielhaft der Bewegungsablauf der Windabweiservorrichtung 17 bzw. des Windabweiserblattes 18 von der Wirkstellung Ws in die Ruhestellung Rs beschrieben: Ausgehend von dem in zumindest teilweise geöffneter Stellung liegenden Schiebedeckel 12, in welcher Stellung die Windabweiservorrichtung 17 vom Schiebedeckel 12 freigegeben ist und in Ausfahr- bzw. Wirkstellung Ws vorliegt, wie in Fig. 3 wiedergegeben, wird bei einem Schließen in Fahrtrichtung Fr des Schiebedeckels 12 zunächst der vor dem Wellental 30 angeordnete Kurvenvorsprung 47 der Kurvenbahn 26 auf den Nocken 29 treffen und bei einer fortgesetzten Schließbewegung des Deckels 12 das Wellental 30 auf den Nocken 29 wirken, wodurch die Ausstellhebelanordnung 19 entgegen dem Uhrzeigersinn um die erste Schwenkachse 21 in einem ersten Schwenkbereich 48 bewegt wird. An den ersten Schwenkbereich 48 schließt sich ein erster Bewegungsüberlagerungsbereich 49 an, in dem das Windabweiserblatt 18 um seine zweite Schwenkachse 23 im Uhrzeigersinn bewegt wird, weil das freie Ende 37 des Windabweiserblattes 18 auf die Steuerbahn 36 trifft, und in dem der Mitnehmeranschlag 41 auf das Windabweiserblatt 18 trifft und in Fahrtrichtung Fr für die Längsverschiebung Ls mitnimmt. Im Bewegungsüberlagerungsbereich 49 sind also die Schwenkbewegung um die zweite Schwenkachse 23 und die Längsverschiebung Ls überlagert, und zwar derart, dass das Windabweiserblatt 18 während der Längsverschiebung Ls soweit in eine annähernd horizontale Lage gebracht wird, in der es zwischen dem Dichtungsanschlag 32 und dem Schenkel Sc des Modulrahmens 15, welcher Schenkel Sc die Steuerbahn 36 trägt, in seinen Aufnahmeraum 42 eingebracht wird. Die Öffnungshöhe Hd des Aufnahmeraums 42, gemessen zwischen dem Dichtungsanschlag 32 und dem Schenkel Sc, kann also geringer sein als die Höhe Hw des Windabweiserblattes 18.

An den ersten Bewegungsüberlagerungsbereich 49 schließt sich eine zweiter Bewegungsüberlagerungsbereich 50 an, in dem zu der Überlagerungsbewegung aus dem ersten Überlagerungsbereich 49 eine weitere Schwenkbewegung der Ausstellhebelanordnung 19 im Uhrzeigersinn um die erste Schwenkachse 21 ausgeführt wird, da auf den Nocken 29 nun der Wellenberg 31 der Kurvenbahn 26 wirkt. Das Windabweiserblatt 18 wird während des zweiten Bewegungsüberlagerungsbereichs 50 vollständig in seinen Aufnahmeraum 37 hineinbewegt, in dem es seine Ruhestellung Rs einnimmt. Wird der Schiebedeckel 12 aus seiner in Fig. 2 dargestellten Schließstellung St zumindest teilweise geöffnet, beispielsweise in Richtung des Fahrzeuginnenraums 16 hin abgesenkt und anschließend entgegen der Fahrtrichtung Fr verschoben, läuft der in Fig. 3 zu sehende Bewegungsablauf des Windabweiserblattes 18 in umgekehrter Reihenfolge ab.

## Patentansprüche

1. Kraftfahrzeug mit einer Dachanordnung, die einen eine Dachöffnung zumindest teilweise freigebenden und verschließenden Schiebedeckel und eine Windabweiservorrichtung besitzt, welche Windabweiservorrichtung ein Windabweiserblatt umfasst, das über eine Ausstellhebelanordnung in eine Ruhe- und Wirkstellung verlagerbar ist, wobei die Ausstellhebelanordnung mit ihrem ersten Ende in einer etwa parallel zur Fahrzeugquerachse verlaufenden ersten Schwenkachse am Fahrzeug gelagert und mit ihrem zweiten Ende mit dem Windabweiserblatt verbunden ist, **dadurch gekennzeichnet, dass** das Windabweiserblatt (18) bei seiner Verlagerung von der Ruhestellung (Rs) in die Wirkstellung (Ws) und umgekehrt etwa parallel zur Fahrzeuglängsachse (FI) längsverschiebbar ist, dass das Windabweiserblatt (18) über eine parallel zur Fahrzeugquerachse (Fq) verlaufende zweite Schwenkachse (23) mit dem zweiten Ende (22) der Ausstellhebelanordnung (19) verbunden ist und dass das Windabweiserblatt (18) um diese zweite Schwenkachse (23) durch eine Steuerbahn (36) zwangsverschwenkbar ist.

2. Kraftfahrzeug nach Anspruch 1, **gekennzeichnet durch** eine am Schiebedeckel (12) angeordnete Kurvenbahn (26) für die Zwangssteuerung der Ausstellhebelanordnung (19) um die erste Schwenkachse (21).

3. Kraftfahrzeug nach Anspruch 1, **gekennzeichnet durch** einen am Schiebedeckel (12) angeordneten Mitnehmeranschlag (41) für das Windabweiserblatt (18), der das Windabweiserblatt (18) bei seiner Verlagerung von der Wirkstellung (Ws) in die Ruhestellung (Rs) etwa parallel zur Fahrzeuglängsachse (FI) verschiebt.

4. Kraftfahrzeug nach Anspruch 1, **dadurch gekennzeichnet, dass** die Steuerbahn (36) an einem benachbart zur Dachöffnung (10) angebrachten Rahmen (15) angeordnet ist.

5. Kraftfahrzeug nach Anspruch 1, **dadurch gekennzeichnet, dass** die Ausstellhebelanordnung (19) für die Längsverschiebbarkeit (Ls) des Windabweiserblattes (18) zwei teleskopartig ineinander verschiebbare Teilhebel (24, 25) aufweist.

6. Kraftfahrzeug nach einem der vorhergehenden Ansprüche, **dadurch gekennzeichnet, dass** die Ausstellhebelanordnung (19) um die erste Schwenkachse (21) durch eine erste Feder (35) belastet an der Kurvenbahn (26) anliegt.

7. Kraftfahrzeug nach einem der vorhergehenden Ansprüche, **dadurch gekennzeichnet, dass** das Windabweiserblatt (18) um die zweite Schwenkachse (23) mit einer zweiten Feder (40) gegenüber der Ausstellhebelanordnung (19) belastet ist.

8. Kraftfahrzeug nach Anspruch 5, **dadurch gekennzeichnet, dass** die beiden Teilhebel (24, 25) gegeneinander mit einer dritten Feder (43) belastet sind.

9. Kraftfahrzeug nach einem der vorhergehenden Ansprüche, **dadurch gekennzeichnet, dass** die Kurvenbahn (26) eine Wellenform mit wenigstens einem Wellental (30) und einem Wellenberg (31) besitzt, wobei - in Fahrtrichtung (Fr) gesehen - das Wellental (30) vor dem Wellenberg (31) angeordnet ist.

## Claims

1. A motor vehicle with a roof assembly which has a sliding cover, which frees and closes a roof opening at least in part, and a draught deflector device, which draught deflector device comprises a draught-deflector leaf which is displaceable into a rest position and an operative position by way of a push-out lever arrangement, wherein the push-out lever arrangement is mounted with its first end on the vehicle in a first pivot axle extending substantially parallel to the transverse axis of the vehicle and is connected by its second end to the draught-deflector leaf, **characterized in that**, during its displacement from the rest position **(Rs)** into the operative position **(Ws)** and *vice versa,* the draught-deflector leaf (18) is longitudinally displaceable substantially parallel to the longitudinal axis **(Fl)** of the vehicle, the draught-deflector leaf (18) is connected to the second end (22) of the push-out lever arrangement (19) by way of a second pivot axle (23) extending parallel to the transverse axis **(Fq)** of the vehicle, and the draught-deflector leaf (18) is forcibly pivotable about the said second pivot axle (23) by a control track (36).

2. A motor vehicle according to Claim 1, **characterized by** a cam track (26) arranged on the sliding cover (12) for the forcible control of the push-out lever arrangement (19) about the first pivot axle (21).

3. A motor vehicle according to Claim 1, **characterized by** an entrainment stop (41) arranged on the sliding cover (12) for the draught-deflector leaf (18) which entrainment stop (41) displaces the draught-deflector leaf (18) substantially parallel to the longitudinal axis **(Fl)** of the vehicle during its displacement from the operative position **(Ws)** into the rest position **(Rs)**.

4. A motor vehicle according to Claim 1, **characterized in that** the control track (36) is arranged on a frame (15) attached adjacent to the roof opening (10).

5. A motor vehicle according to Claim 1, **characterized in that** the push-out lever arrangement (19) has two lever portions (24, 25) displaceable one into the other in the manner of a telescope for the longitudinal displaceability **(Ls)** of the draught-deflector leaf (18).

6. A motor vehicle according to any one of the preceding Claims, **characterized in that** the push-out lever arrangement (19), loaded by a first spring (35) about the first pivot axle (21), rests against the cam track (26).

7. A motor vehicle according to any one of the preceding Claims, **characterized in that** the draught-deflector leaf (18) is loaded with a second spring (40) about the said second pivot axle (23) with respect to the push-out lever arrangement (19).

8. A motor vehicle according to Claim 5, **characterized in that** the two lever portions (24, 25) are loaded with respect to each other by a third spring (43).

9. A motor vehicle according to any one of the preceding Claims, **characterized in that** the cam track (26) has a corrugated shape with at least one valley (30) and one peak (31), wherein the valley (30) is situated in front of the peak (31) as viewed in the direction of travel **(Fr)**.

## Revendications

1. Véhicule automobile avec un agencement de toit qui possède un capot coulissant dégageant et fermant au moins en partie l'ouverture de toit, et un dispositif de déflexion du vent, lequel dispositif de déflexion du vent comprend un déflecteur qui est déplaçable, par l'intermédiaire d'un dispositif à levier de sortie, dans une position de repos et une position active, le dispositif à levier de sortie étant monté, par sa première extrémité sur le véhicule, sur un premier axe de pivotement s'étendant à peu près parallèlement à l'axe transversal du véhicule, et étant relié par sa deuxième extrémité au déflecteur, **caractérisé en ce que** le déflecteur (18) peut coulisser longitudinalement dans son déplacement de la position de repos (Rs) à la position active (Ws) et inversement, à peu près parallèlement à l'axe longitudinal (Fl) du véhicule, **en ce que** le déflecteur (18) est relié par un deuxième axe de pivotement (23) s'étendant parallèlement à l'axe transversal (Fq) du véhicule, à la deuxième extrémité (22) du dispositif à levier de sortie (19), et **en ce que** le déflecteur (18) peut pivoter forcé par une voie de commande (36), autour de ce deuxième axe de pivotement (23).

2. Véhicule automobile selon la revendication 1, **caractérisé par** une voie en courbe (26), disposée sur le capot coulissant (12), pour la commande forcée du dispositif à levier de sortie (19) autour du premier axe de pivotement (21).

3. Véhicule automobile selon la revendication 1, **caractérisé par** une butée d'entraînement (41) disposée sur le capot coulissant (12) pour le déflecteur (18), laquelle déplace le déflecteur (18) à peu près parallèlement à l'axe longitudinal (Ff) du véhicule, lors de son déplacement de la position active (Ws) à la position de repos (Rs).

4. Véhicule automobile selon la revendication 1, **caractérisé en ce que** la voie de commande (36) est disposée sur un cadre (15) placé à proximité de l'ouverture de toit (10).

5. Véhicule automobile selon la revendication 1, **caractérisé en ce que** le dispositif à levier de sortie (19) comporte pour le coulissement longitudinal (Fs) du déflecteur (18), deux leviers partiels (24, 25) pouvant coulisser de manière télescopique l'un dans l'autre.

6. Véhicule automobile selon l'une des revendications précédentes, **caractérisé en ce que** le dispositif à levier de sortie (19) s'applique contre la voie en courbe (26), autour du premier axe de pivotement (21), sous l'action d'un premier ressort (35).

7. Véhicule automobile selon l'une des revendications précédentes, **caractérisé en ce que** le déflecteur (18) est soumis à l'action d'un deuxième ressort (40) autour de l'axe de pivotement (23), par rapport au dispositif à levier de sortie (19).

8. Véhicule automobile selon la revendication 5, **caractérisé en ce que** les deux leviers partiels (24, 25) sont sollicités l'un contre l'autre par un troisième ressort (43).

9. Véhicule automobile selon l'une des revendications précédentes, **caractérisé en ce que** la voie en courbe (26) présente une forme ondulée avec au moins un creux d'onde (30) et un sommet d'onde (31), le creux d'onde (30) - vu dans le sens de marche (Fr) - étant disposé devant le sommet d'onde (31).
